(19) Europäisches Patentamt / European Patent Office / Office européen des brevets

(11) **EP 2 780 871 B1**

(12) **EUROPEAN PATENT SPECIFICATION**

(45) Date of publication and mention of the grant of the patent:
**16.09.2015 Bulletin 2015/38**

(21) Application number: **12787437.8**

(22) Date of filing: **15.11.2012**

(51) Int Cl.:
**G06Q 10/00** (2012.01)     **G06K 9/32** (2006.01)
**G06T 7/20** (2006.01)

(86) International application number:
**PCT/EP2012/072691**

(87) International publication number:
**WO 2013/072401 (23.05.2013 Gazette 2013/21)**

(54) **TRACKLET-BASED MULTI-COMMODITY NETWORK FLOW FOR TRACKING MULTIPLE PEOPLE**

TRACKLET-BASIERTER MULTI-COMMODITY-NETZWERKFLUSS ZUR VERFOLGUNG MEHRERER PERSONEN

FLUX DE RÉSEAU PLURISECTORIEL BASÉ SUR DES MINI-TRAJECTOIRES POUR SUIVRE DE MULTIPLES PERSONNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2011 EP 11189241**

(43) Date of publication of application:
**24.09.2014 Bulletin 2014/39**

(73) Proprietor: **Swiss Timing Ltd.**
**2606 Corgémont (CH)**

(72) Inventors:
• **BEN SHITRIT, Horesh**
  **84633 Beer-Sheva (IL)**
• **BERCLAZ, Jerome**
  **CH-3974 Mollens (CH)**
• **FLEURET, François**
  **CH-1400 Yverdon-les-Bains (CH)**
• **FUA, Pascal**
  **CH-1126 Vaux-sur-Morges (CH)**

(74) Representative: **Gilligmann, Benoît Philippe**
**ICB**
**Ingénieurs Conseils en Brevets SA**
**Faubourg de l'Hôpital 3**
**2001 Neuchâtel (CH)**

(56) References cited:
**US-A1- 2009 059 007**

• F. FLEURET; J. BERCLAZ; R. LENGAGNE; P. FUA: "Multi-Camera People Tracking with a Probabilistic Occupancy Map", PAMI, vol. 30, no. 2, February 2008 (2008-02), pages 267-282, XP11246440, cited in the application
• J. BERCLAZ; F. FLEURET; E. TURETKEN; P. FUA: "Multiple Object Tracking Using K-Shortest Paths Optimization", PAMI, vol. 33, September 2011 (2011-09), pages 1806-1819, XP11445533, cited in the application
• L. ZHANG; Y. LI; R. NEVATIA: "Global Data Association for Multi-Object Tracking Using Network Flows", CVPR, 2008, XP31297142, cited in the application
• A. PERERA; C. SRINIVAS; A. HOOGS; G. BROOKSBY; H. WENSHENG: "Multi-Object Tracking through Simultaneous Long Occlusions and Split-Merge Conditions", CVPR, 2006, pages 666-673, XP10923023, cited in the application
• J. WOLF; A. VITERBI; G. DIXON: "Finding the Best Set of K Paths through a Trellis with Application to Multitarget Tracking", IEEE TRANSACTIONS ON AEROSPACE AND ELECTRONIC SYSTEMS, vol. 25, no. 2, March 1989 (1989-03), pages 287-296, XP111662, cited in the application

## Description

The present invention pertains to the problem of tracking simultaneously multiple people, and more specifically people whose paths may intersect over long periods of time.

## 1 State of the art

In this section, we first review generic approaches to multiple target tracking and then briefly discuss those that are specifically designed to track multiple players in team sports. For the sake of clarity, all references to scientific publications or articles are made in italic into brackets. This will apply to the remainder of the document as well in order not to be confused with other references pertaining to the present invention.

### 1.1 Multiple Target Tracking

Multiple target tracking has a long tradition, going back many years for applications such as radar tracking [15]. These early approaches to data association usually relied on gating and Kalman filtering, which have later made their way into our community [16, 17, 18, 19, 20]. Because of their recursive nature, when used to track people in crowded scenes, they are prone to identity switches that are difficult to recover from. Particle-based approaches such as [21, 22, 23, 24, 25, 26, 27, 28, 1], among many others, partially address this issue by simultaneously exploring multiple hypotheses. However, they can handle only relatively small batches of temporal frames without their state space becoming unmanageably large and often require careful parameters setting to converge.

Another approach is to perform many simple operations on trajectory fragments or tracklets, such as adding a detection to ones, splitting, or merging. The operations can be selected at random. Those that minimize a global energy function are retained, as in Multi Hypothesis Tracking (MHT) [29] and Markov Chain Monte Carlo Data Association (MCMCDA) [30, 31, 32, 33]. These algorithms may take advantage of large frame batches but are quite difficult to implement and involve many parameters, which need to be learned and tuned.

Another recent approach in multi object tracking is to first construct reliable short tracklets, and then concatenate them into long trajectories. The tracklet association problem can be formulated as finding the minimal cost for connecting bi-bipartite graph [34, 35, 36, 37, 38], which can be solved using the Hungarian algorithm. The main differences between the algorithms which rely on this approach, are in the way the tracklets are constructed and the similarity measure between the tracklets. They incorporate in the cost of each tracklet appearance terms, motion terms and even social terms. Nevertheless, these approaches match tracklets in successive batches of frames, and therefore are sub-optimal.

To better manage tracklet association and manage identities, a "belief matrix" that is the approximation of the association probabilities can be maintained [39]. Unlike algorithms based on bi-bipartite graph solving, this on-line algorithm propagates the probabilities forward and updates them as the appearance information is available. This approach decouples the tracking problem from the identification problem. This work was extended to include information of the relationship between tracks [40, 41]. However, the authors only used simulated data, and annotated relationships between tracked people. It is not clear how these terms would be found in a practical tracking system.

Recent tracklet-based tracking approach, also solves the problem globally. The work of [42], presents merging and splitting of two tracks of pairs of persons at a given time. Though very useful for tracking pedestrians, which tend to avoid collisions, it is not applicable for tracking multiple players in real sports games. In addition, [43, 44] formulate the tracking problem for a monocular camera as a Conditional Random Field (CRF) and model the occlusions and the motion dependency between tracklets. As we utilize a multi-camera setup, we manage to handle most of the occlusion at the detection stage, In addition, we argue that a simple motion model is not suitable for tracking players in a complex ball game.

In recent years, Dynamic and Linear Programming approaches have emerged as powerful alternatives. They operate on graphs whose nodes can either be all the spatial locations where somebody could potentially be [2, 3], only those where a detector has fired [4, 5], or short temporal sequences of consecutive detections that are very likely to correspond to the same person [6, 7, 8]. On average, they are much more robust than the earlier methods but typically require the careful setting of edge costs in the graph, the introduction of special purpose nodes to handle occlusions, and an assumption that the appearance of people remains both unchanged and discriminative from frame to frame. This last assumption is damaging in cases where the lighting changes quickly or where the appearance is only distinctive at long intervals, such as when tracking ballplayers who all wear the same uniform and whose number can only be read occasionally.

In our recent work [9], we overcame this limitation by directly working on the graph of all potential locations over time and solving the data association problem using the K-Shortest Paths (KSP) algorithm [10]. Our algorithm completely ignores appearance, does not require any heuristics regarding occlusion nodes, and has a comparatively low computation complexity in the order of $O(k(m + n\log n))$, where $n$, $m$, and $k$ are the number of graph nodes, edges, and trajectories. And, yet, it has been shown to outperform many state-of-the-art methods on the PETS'09 data set [45]. Its main limitation is that, because it does not exploit appearance, it cannot prevent identity switches when people come close to each other. There is therefore a need for a solution exempt from those limitations.

Recent approaches attempted coupling the detection and tracking steps [46, 47], instead of dissociating them as we do. In [47], 2D detections from each camera are used as input and coupled for 3D localization and tracking purposes. In [46], the inputs are background-foreground binary masks and the pedestrian detection and tracking are performed directly in 3D. These methods are shown to improve performance slightly in terms of miss detections and false detections over KSP [9] in some cases. However, like KSP, they do not incorporate appearance information and, therefore, cannot recover from identity mismatches. We could thus have used one of those algorithms instead of KSP to perform the first step of our approach as described below.

## 1.2 Tracking Multiple Players

Reliable tracking of players engaged in team sports involves challenges that do not exist when tracking pedestrians because the players tend to constantly change their motion pattern and, sometimes, to tackle their opponent. This makes their trajectories much more erratic and less predictable.

In [48], a framework for tracking multiple basketball player similar to ours is presented. Player detection is achieved using multiple cameras, while occasional reading of the numbers printed on their shirts is used for identification purposes. The algorithm relies on simple tracking to propagate the players' identities over time. The authors themselves write that this part should be improved and only present detection results without tracking ones.

More recently [49], Conditional Random Fields (CRF) have been used to track multiple basketball players from the same team in sequences acquired with a single moving camera. However, CRF require modeling and learning an objective function, which is then optimized. Therefore, extensive training is required and it is not clear how much new training is required from one match to the next.

## 2 Brief summary of the invention

A goal of the present invention is to address the problem of tracking multiple people whose paths may intersect over long periods of time while retaining their individual identities and avoid switching, while appearance cues are only available sporadically.

To this end, we assume that a time-independent people detector is available and provides us with probabilities of presence at various possible spatial locations. Our task is therefore to link these detections into consistent trajectories, which is a sub-domain in tracking known as tracking-by-detection [1].

This is achieved thanks to a method for continuously tracking multiple people while preserving identities under global appearance constraints, wherein people's trajectories may intersect, and wherein only sparse appearance information is available, comprising the steps of:

- choosing an area of interest to be filmed;

 - discretize said area into a grid with K cells;

 - partition the number N of tracked people into L groups;

 - assign separate appearance information models for each group;

 - filming video sequences with a plurality of cameras, providing frames at a rate R superior to one per second, and extract appearance information, wherever available;

 - generate a probability occupancy map (POM) for said area, wherein said POM contains the probability of presence of people in each grid cell at T consecutive instants corresponding to each frame of the filmed sequences;

 - compute trajectories using a K-shortest path algorithm based on a K*T*L Direct Acyclic Graph (DAG) modeling, wherein presence and flow constraints (1)-(5) are set for each node of the graph;

 and finally

 - derive individual trajectories for each group identity by solving a layered tracklet-based multi-commodity flow (T-MCNF) programming problem (20), wherein tracklets are connected parts of splitted trajectories, wherein each trajectory is split at positions which are in the neighborhood of another, wherein said neighborhood encompasses locations within a predefined distance.

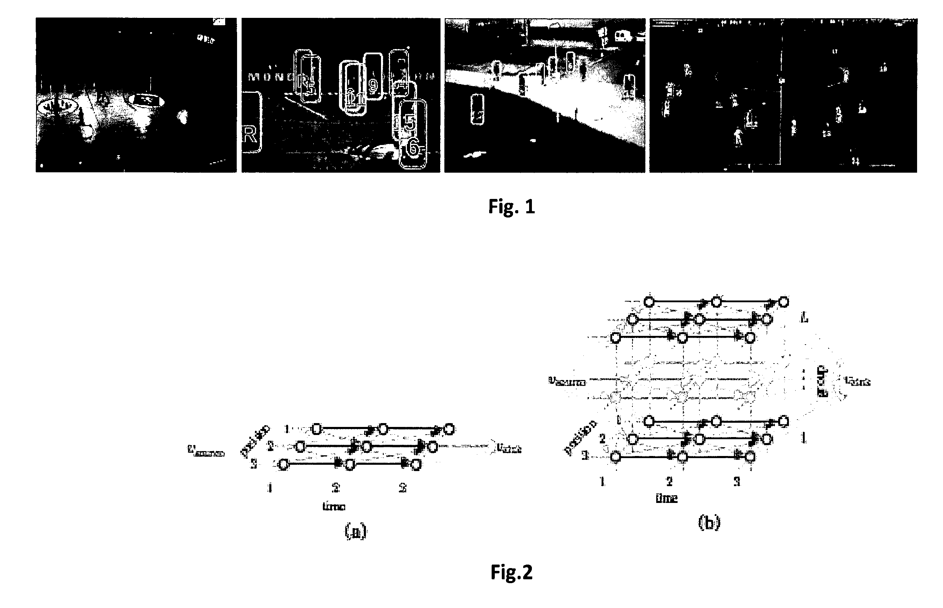

In the frame of the present invention, we have extended our earlier approach [9], which completely ignored appearance, and could result in unwarranted identity switches in complex scenes. We now allow the exploitation of *sparse* appearance information to keep track of people's identity, even when their paths come close to each other or intersect. By sparse we mean that the appearance needs only be discriminative in a very limited number of frames. For example, in a basketball sequence shown in figure 1, all teammates wear the same uniform and the numbers on the back of their shirts can only be read once in a long while. Furthermore, the appearance models are most needed when the players are bunched together. However, it is precisely then, that they are the least reliable [11]. Our algorithm, which we first introduced in a conference paper [12], can disambiguate such situations using the information from temporally distant frames. This is in contrast with many state-of-the-art approaches that depend on associating appearance models across *successive* frames [5, 3, 13, 14].

We achieve this by defining the multi-object tracking with appearance constraints as a multi-commodity minimum-cost maximum-flow problem. This involves working with a layered graph such as the one of Fig. 2(b) explained hereafter, which contains several grid cells at each possible spatial location, one for each possible identity group. It is much larger than the one of the original approach that contains a single layer and is depicted by Fig. 2(a). However, by first running the KSP method [9] on this smaller graph, we can eliminate all nodes that are consistently empty and run our algorithm on a much reduced layered graph, thus making the problem tractable.

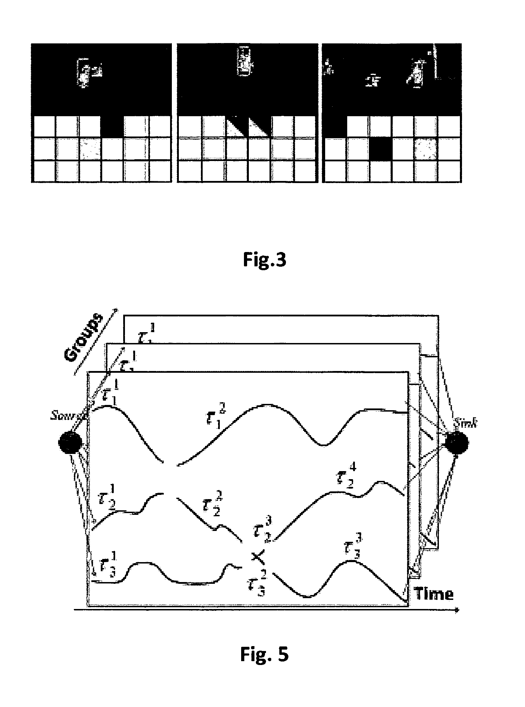

The computation is then further sped up by grouping unambiguously connected graph nodes graph into tracklets, which results in the further reduced graph of Fig. 5 and allows for enhanced real-time performance, as validated on multiple datasets featuring basketball players, soccer players, and pedestrians and demonstrating a significant improvement over earlier approaches.

Advantages of of the present invention are therefore both a reformulation of the identity-preserving multiple target tracking problem in terms of finding the global maximum of a convex objective function, and a performance improvement of the real-time algorithm for doing so..

Further features and advantages of the present invention will be better understood in view of the description and the figures, in which:

- Figure 1 shows representative tracking results from four tested datasets Basket-Ball APIDIS, Basket-Ball FIBA, Pedestrians PETS'09 and Soccer ISSIA;

- Figure 2 shows the direct acyclic graph framework used by the algorithm of the present invention; a single-layered graph is shown on figure 2 (a) and a multiple-layered graph taking appearance information into account is shown on figure 2(b);

- Figure 3 illustrates the problem of identities disambiguation by the linear program solver, in the case of a football game;

- Figures 4 (a), (b), (c) and (d) show the tracklet-based framework introduced in the algorithm of the present invention;

- Figure 5 shows the tracklet-based multi-commodity network flow (T-MCNF) optimization framework for the algorithm in the frame of the present invention;

- Figure 6 shows the different views of a basket-ball pitch by the seven cameras used for running the T-MCNF algorithm according to the present invention;

- Figure 7 shows the different views of a soccer pitch by the six cameras used for running the T-MCNF algorithm according to the present invention

- Figure 8 shows an example of appearance information extraction patterns based on a basket-ball game, parts (ii), (iii), (iv) of Figure 8 showing different projections of a base color image shown on part (i) of figure 8;

- Figures 9 (i), (ii), (iii) and (iv) show comparative identity tracking assessment metrics for evaluating identities mismatches for two different algorithms, figures 9 (i) and 9 (ii) showing respectively an identity mismatch score (a.k.a. *mme)* and a global identity mismatch score (a.k.a. *gmme)* for a first algorithm A, while figures (iii) and (iv) show the same scores *mme* and *gmme* for another algorithm B;

- Figure 10 shows comparative results of the T-MCNF algorithm according to the present invention over prior art algorithms using various evaluation metrics - MOTA in figure 10(a) and GMOTA in figure 10(b);

- Figure 11 shows a performance comparison of the T-MCNF algorithm for different datasets involving soccer players, basket-ball players, and pedestrians wherein the appearance model is based on color only;

- Figure 12 shows a failure case of the tracking algorithm for pedestrians;

- Figure 13 shows a performance comparison of the T-MCNF algorithm for two different basket-ball datasets, wherein the appearance model is based on color and shirt numbers;

- Figure 14 shows how the tracking performances of various algorithms, including T-MCNF, are affected by the batch sizes;

- Figure 15 shows how the number of cells set for defining the neighborhood and splitting threshold for the tracklets affects the performance of the T-MCNF algorithm.

## 3 Detailed description of the present invention

### Algorithm

In this section, we assume that the ground plane is represented by a discrete grid and that, at each time step over a potentially long period of time, we are given as input a Probabilistic Occupancy Map *[3]* (POM) containing probabilities of presence of people in each grid cell, which can be generated by any people detector. While informative, the resulting probability maps may contain both missed detections and false positives, especially when the scene becomes crowded.

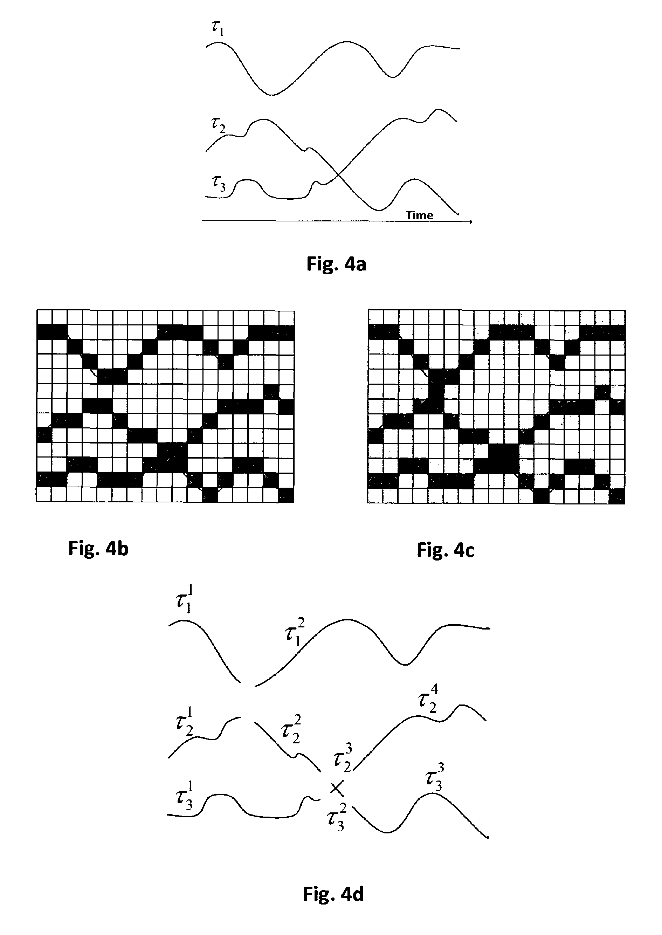

To infer identity-preserving trajectories from these potentially noisy POMs, we first extend the formalism introduced in *[9]* to account for individual identities, which the original formulation did not do. In practice, we compute flows on Direct Acyclic Graphs (DAGs) such as those of Fig. 4. This results in our multi-target tracking problem being reformulated as an Integer Programming problem, which can be relaxed into a Linear Program that can be solved using standard optimization packages. It has been shown that multi-commodity network flow (MCNF) problems on DAGs, can be solved in a polynomial time *[50]*. Therefore, their underlying constraint matrix is totally unimodular. In general, for multi-commodity network flow (MCNF) problems, with more than two commodities (or groups of people, in our case), the solution of the Linear Programming is not necessarily the optimal solution for the Integer Programming, because the corresponding constraint matrix is not totally unimodular *[51]*. However, for practical applications it almost always the case *[52]*.

Running the Linear Programming on the full graph might be very slow for long sequences, as the graphs tend to be large. To address this, we implemented a two step process: First, we run the K-Shortest Paths (KSP) algorithm *[9]*, which can be seen as a single commodity network flow. This produces trajectories that may include identity switches but tell us which are the grid cells in which we can expect to find people at any given time. We then eliminate most of the other grid cells and run our Linear Program on a significantly smaller graph, which saves both time and memory. Pruning the graph results does not guarantee that the solution we find is optimal but allows the batch processing of substantial numbers of frames relatively quickly. Furthermore, in practice, we have not seen any significant degradation in tracking performance.

For a further speed up, needed in real-time applications, we retain the two-step process but, in addition to pruning the graph, we group nodes that are unambiguously connected into tracklets. We treat these tracklets as the nodes of a reduced graph, which is now small enough for the Linear Program to be solved in real-time.

In the remainder of this section, we first formulate our data association problem as a multi-commodity network flow problem on a DAG. We then show that doing so requires solving an Integer Programming problem, which we relax to a Linear Programming one. Finally we discuss the two above-mentioned approaches to speeding up its resolution.

### 3.1 Formulation

As in *[9]*, we model people's trajectories as continuous flows going through an area of interest. Preserving the identities of the tracked people means that the flows should not be allowed to mix. In addition, available soft biometrics or appearance cues should be used to assign flows to people. These two elements are missing from the original formulation. By formulating the tracking problem as a multi-commodity network flow problem we manage to include these elements in our tracking algorithm. In our formulation, we use the notation summarized in Table 1 hereunder.

TABLE 1
notation

| | |
|---|---|
| $T$ | number of time steps. |
| $\mathbf{I} = (\mathbf{I}^1, \ldots, \mathbf{I}^T)$ | captured images. |
| $K$ | number of locations on the ground plain. |
| $L$ | number of labeled groups of people |
| $N_l$ | maximum number of people in group $l$. |
| $\mathcal{N}_\delta(k) \subset \{1, \ldots, K\}$ | neighborhood of location $k$, all locations which can be reached within $\delta$ time instants. |
| $\mathcal{G} = (\mathcal{V}, \mathcal{E})$ | full graph with $|\mathcal{V}| = K \times T \times L$. |
| $\mathcal{G}' = (\mathcal{V}', \mathcal{E}')$ | a pruned graph, subset of $\mathcal{G}$. |
| $v_i^l(t)$ | node in the graph, represents group $l$ in location $i$ at time $t$. |
| $m_i^l(t)$ | number of people from group $l$ in location $i$ at time $t$. |
| $e_{i,j}^l(t)$ | directed edge in the graph. |
| $f_{i,j}^l(t)$ | number of people moving from location $i$ to location $j$ at time $t$ in group $l$. |
| $Q_i(t)$ | r.v. standing for the true identity group of a person in location $i$, at time $t$. |
| $X_i(t)$ | r.v. standing for the true occupancy of location $i$ at time $t$. |
| $\varphi_i^l(t)$ | estimated probability of a location $i$ to be occupied by a person from group $l$, according to the appearance model. |
| $\rho_i(t)$ | estimated probability of location $i$ to be occupied by an unidentified person according to the pedestrian detector. |
| $\delta$ | maximum distance between locations, used to define a neighborhood of a location or a trajectory. |
| $\mathfrak{F}$ | set of occupancy maps physically possible. |
| $\mathcal{T}$ | set of trajectories obtained by the KSP algorithm. |
| $\tau_q$ | $\subset \mathcal{T}$ a trajectory obtained by the KSP algorithm. |
| $\tau_q^i$ | $\subset \tau_q$ a tracklet, a fragment of trajectory $\tau_q$. |
| $\mathcal{G}^* = (\mathcal{V}^*, \mathcal{E}^*)$ | the graph of tracklets. |
| $v_i^{*l}$ | node in the graph of tracklets, represents a tracklet of group $l$ with index $i$. |
| $e_{i,j}^{*l}$ | directed edge in the graph of tracklets. |

To this end, we represent the ground plane as a discrete grid containing $K$ cells and compute POMs at $T$ consecutive time instants. We partition the total number of tracked people into $L$ groups and assign a separate appearance model to each group. In a constrained scene, such as a ball game, we can restrict each group $l$ to include at most $N_l$ people, but in general cases, $N_l$ is left unbounded. The groups can be made of individual people, in which case $N_l = 1$. They can also be composed of several people that share a common appearance, such as members of the same team or referees, in sports games.

Our tracking algorithm involves computing flows on a Directed Acyclic Graph (DAG), as shown in Figure 2(a). In *[9]*, the DAG includes source and sink nodes that allow people to enter and exit at selected locations, such as the boundaries of the playing field. This can be interpreted as a single-commodity network flow. Figure 2(b) illustrates a multi-layered graph that takes image-appearance into account, and where the tracking problem is formulated as a multi-commodity network flow problem which can be illustrated as a duplication of the graph for each appearance-group. The obtained problem has a much larger graph, which makes it yet intractable for real-time solving. Two methods for reducing this complexity are proposed in the section 3.3 aimed at optimizing its performance and thus precisely allowing for real-time performance.

We introduce a Directed Acyclic Graph (DAG) $\mathcal{G} = (\mathcal{V}, \mathcal{E})$ with number of vertices $|V| = K \times T \times L$ such as the one of Fig. 2(b), in which every node $v_i^l(t)$ represents a location $i$ at a given time instant $t$ and for a particular identity group $l$. Each edge represents admissible motion between two locations, in two consecutive time instants. Since groups cannot exchange their identity, there are no edges linking groups, and therefore no vertical edge in Fig. 2(b). The resulting graph is made of disconnected layers, one per each identity group. This is in contrast to the approach of

[9], which relied on a single-layer graph such as the one of Fig. 2(a).

Let $\delta(k)$ {1 ,...,$K$} be the neighborhood of location $k$, that is, the set of all physical locations that can be reached from $k$ in $\delta$ time instants. In practice, for the graph construction we set $\delta$ = 1, which is already longer than the distance a person can travel in 1/25th of a second, the typical frame duration in our experiments.

There is an edge $e_{i,j}^l(t)$ from location $i$ to location $j$ if and only if $j$ ($i$). We associate to every node of the graph a variable $m_k^l(t)$ standing for the number of people of group $l$ present on location $k$ at time $t$. Similarly, a variable $f_{i,j}^l(t)$ corresponds to every edge $e_{i,j}^l(t)$, and encodes the number of people of group $l$ moving from node $i$ to $j$ at time $t$.

We now define a set of constraints to ensure that every flow through the graph is physically possible. First, we enforce flow continuity by making sure that the sum of flows arriving at one node at time $t$ is equal to the sum of flows leaving the same location at time $t$ + 1.

$$\forall t, j, l \underbrace{\sum_{i:j\in\mathcal{N}(i)} f_{i,j}^l(t)}_{\text{Arriving at } j} = m_j^l(t) = \underbrace{\sum_{k\in\mathcal{N}(j)} f_{j,k}^l(t+1)}_{\text{Leaving from } j} . \quad (1)$$

Second, our grid resolution is sufficiently fine for a location not to be occupied by more than one person, hence

$$\forall t, k, \sum_{j\in\mathcal{N}(k)} \sum_{l=1}^{L} f_{k,j}^l(t) \leq 1 . \quad (2)$$

Third, the flows have to be positive and we have

$$\forall k, j, t, \ f_{k,j}^l(t) \geq 0 . \quad (3)$$

In case we have a precise knowledge about the number of people we track, we can use an optional constraint to ensure that no more than the allowed number of people is present in each group

$$\forall t, l \sum_{k=1}^{K} m_k^l(t) \leq N_l . \quad (4)$$

Our model as described so far can only handle a fixed number of people. In practice, however, the number of people in the scene, may vary over time. We therefore introduce a source and a sink nodes, $u_{\text{source}}$ and $u_{\text{sink}}$. The source node is connected to every node from the first frame and the sink to every node from the last frame, as shown in Fig. 2(b). Additionally, both nodes are connected to all locations in the set $(k)$ {1 ,...,$K$} of locations susceptible to act as entry or exit points throughout the whole sequence. This last part is not illustrated in Fig. 2 to avoid overloading it. The source and sink nodes are also subject to a constraint that enforces all the flows starting in $u_{\text{source}}$ to end in $u_{\text{sink}}$

$$\sum_{j\in\mathcal{N}(u_{\text{source}})} f_{u_{\text{source}},j} = \sum_{k:u_{\text{sink}}\in\mathcal{N}(k)} f_{k,u_{\text{sink}}} . \quad (5)$$

**3.2 Linear Program** (LP)

Let us now assume that we have access to a person detector that estimates the probability of presence of someone at every position $k$

$$\rho_k(t) = \hat{P}(X_k(t) = 1 \,|\, \mathbf{I}) , \quad (6)$$

where $X_k(t)$ is a random variable standing for the true occupancy of location $k$ at time $t$, and I represents the input images. Let us further assume that we can compute an appearance model and that we use it to estimate

$$\varphi_k^l(t) = \hat{P}(Q_k(t) = l \,|\, \mathbf{I}, X_k(t) = 1)\,, \quad (7)$$

the probability that the identity of a person occupying location $k$ at time $t$ is $l$, given that the location is indeed occupied. Here, $Q_k(t)$ is a random variable standing for the true identity group of a person in location $k$ at time $t$. Let there be $L$ identity groups, hence $Q_k(t) \{1,...,L\}$. The appearance model can rely on various cues, such as color similarity or shirt numbers of sports players. In Section **4.3,** we describe in details the ones we use for different datasets. Appearance cues could also be extended to face recognition patterns and other identification parameters such as height, hair color or any relevant identification feature.

Since we are seeking a set of physically possible trajectories that best explain the observed image evidence, we look for

$$\hat{\mathbf{m}} = \arg\max_{\mathbf{m}\in\mathfrak{F}} P(\mathbf{X} = \mathbf{x}, \mathbf{Q} = \mathbf{q} \,|\, \mathbf{I})\,, \quad (8)$$

where **m** is a set of occupancy maps and is the space of occupancy maps satisfying constraints from Eqs. (1) to (5). As shown in the appendix supplied as supplementary material, this can be expressed as a function of $\rho_i(t)$ and $\varphi_i^l(t)$ as

$$\hat{\mathbf{m}} = \arg\max_{\mathbf{m}\in\mathfrak{F}} \sum_{t,k,l} m_k^l(t) \log\left(\frac{\rho_k(t)\varphi_k^l(t)L}{1-\rho_k(t)}\right). \quad (9)$$

Note that when no appearance information is available, we set $l, \varphi_k^l(t) = 1/L$ and the appearance term cancels the $L$ coefficient in the objective function. In this case, this simplifies to the original one of [9]. This property makes it possible to process sparse appearance information, such as shirt numbers that can be read only once in a while. The spatial extent of trajectories is mostly based on the occupancy information, while the sparse appearance places a trajectory in the correct identity group and avoids switches at intersections.

Maximizing the criterion of Eq. (9) under the constraints of Eqs. (1) to (5) can be formulated as an Integer Program, which is optimized with respect to the flows $f_{i,j}^l(t)$

$$\text{maximize} \sum_{t,i,l} \log\left(\frac{\rho_i(t)\varphi_i^l(t)L}{1-\rho_i(t)}\right) \sum_{j\in\mathcal{N}(i)} f_{i,j}^l(t) \quad (10)$$

$$\text{subject to } \forall t,i, \quad \sum_{j\in\mathcal{N}(i)} \sum_{l=1}^{L} f_{i,j}^l(t) \leq 1$$

$$\forall t,l,i, \quad \sum_{j\in\mathcal{N}(i)} f_{i,j}^l(t) - \sum_{k:i\in\mathcal{N}(k)} f_{k,i}^l(t-1) \leq 0$$

$$\sum_{j\in\mathcal{N}(v_{\text{source}})} f_{v_{\text{source}},j} - \sum_{k:v_{\text{sink}}\in\mathcal{N}(k)} f_{k,v_{\text{sink}}} \leq 0$$

$$\forall t,l, \quad \sum_{i=1}^{K} \sum_{j\in\mathcal{N}(i)} f_{i,j}^l(t) \leq N_l$$

$$\forall t,l,i,j, \quad f_{i,j}^l(t) \geq 0\,.$$

In practice, since Integer Programming is NP-complete, we relax the problem of Eq. (10) into a Linear Program (LP) of polynomial complexity by making the variables real numbers between zero and one.

As the constraints matrix of a multi-commodity network flow problem is not totally unimodular [51], the solution

8

that is found by the LP solver might not be the optimal one for the IP problem. In addition, the LP results are not guaranteed to be integral and real values that are far from either zero or one may occur. In practice this only happens very rarely, and typically when two or more targets are moving so close to each other that appearance information is unable to disambiguate their respective identities, as depicted by Fig. 3, showing that the LP solver might produce non-integer values when two or more people intersect In this example, the tracking algorithm assigns non-integer values for the identities of two soccer players at two adjacent locations, and recovers after the intersection for assigning again integer values for each identity These non-integer results can be interpreted as an uncertainty about identity assignment by our algorithm. This represents valuable information that could be dealt with accordingly if necessary. However, as this happens rarely, we simply round off non-integer results in our experiments.

### 3.3 Optimization

Even though turning the Integer Programming of Eq. (10) into a Linear Programming one substantially reduces its computational complexity, the large number of variables and constraints involved still results in too large a problem to be directly handled by regular solvers for real-life cases such as those presented in Section **4**. It is thus necessary to further simplify the problem. In the remainder of this section, we present two different ways to achieve this.

*3.3.1 Pruning the Graph*

The simplest way to reduce the computational complexity is to remove unnecessary nodes from the graph of Fig. 2(b). To this end, we first run our earlier algorithm *[9]* on a graph with only one commodity *(L* = 1), such as the one in Fig. 2(a). The algorithm tracks all the people in the scene very efficiently but ignores appearance and is therefore prone to identity switches. We obtain a set of trajectories $\mathcal{T}$, , each trajectory $\tau_q$ $\mathcal{T}$ is a subset of vertices on this graph

$$\tau_q = \{v_i(t_q), v_j(t_q + 1), \ldots, v_h(T_q)\} \quad (11)$$

where the vertices belong to consecutive time instants starting at time *tq* and ending at time instant *Tq.* We take $\mathcal{N}_\delta(\tau_q) \subset \mathcal{V}$ to be the neighborhood of trajectory $\tau_q$, which is the set of all vertices that can be reached within $\delta$ time instances from a node $v_i(t)$ $\tau_q$. Formally, we write

$$\mathcal{N}_\delta(\tau_q) = \bigcup_{v_i(t) \in \tau_q} \mathcal{N}_\delta(v_i(t)), \quad (12)$$

where $\delta$ can be larger than one, unlike when construction the graph, as explained in section **3.1**. We take the set of *shared* vertices *S* to be those who are included in the neighborhood of more than one trajectory. We write

$$\mathcal{S} = \{v_j(t) \in \mathcal{V}, \text{ s.t. } \sum_{\tau_q \in \mathcal{T}} \mathbb{1}(v_j(t) \in \mathcal{N}(\tau_q)) > 1\}. \quad (13)$$

The vertices *V'* in our pruned graph $\mathcal{G}' = (\mathcal{V}', \mathcal{E}')$ are taken to be

$$\mathcal{V}' = \mathcal{T} \cup \mathcal{S}, \quad (14)$$

the union of the vertices in all trajectories and the shared vertices.

In other words, we eliminate most of the nodes in which nobody was found. However, we retain the shared vertices *S* because KSP produces trajectories with very good spatial accuracy, except where people meet and separate. There, it may erroneously link bits of trajectories belonging to different individuals and ignore the vertices through which the true trajectories pass. By adding the shared nodes, we give our algorithm the degrees of freedom it requires to avoid such mistakes by using appearance information. After pruning, we set *L* to be the true number of identity groups, and keep only the set of constraints from equations Eq. (1) to Eq. (5), which involves vertices and edges of the pruned graph. In our experiments, the pruning reduces the number of variables and constraints by two to three orders of magnitude.

In the remainder of this paper, we will refer to this approach as Multi-Commodity Network Flow (MCNF).

*3.3.2 Grouping Nodes into Tracklets*

A more radical approach to reducing the computational complexity is to not only remove obviously empty nodes from the graph but, in addition, to group obviously connected ones into *tracklets.* The Linear Program of Eq. (10) can then be solved on a reduced graph such as the one of Fig. 2(c) whose nodes are the tracklets instead of individual locations. In the remainder of this paper, we will refer to this approach as Tracklet-based Multi-Commodity Network Flow (T-MCNF).

Tracklets had only been used so far for people tracking [35, 37] assuming that appearance was preserved over consecutive frames. In the frame of the present invention however, appearance information may be unavailable over long periods of time and we therefore create our tracklets without reference to it; instead in order to take appearance into account, separate appearance models are assigned to each group and graphs are duplicated as formulated in figure 2b) and shown in figure 5.

To this end and as before, we start with the output of the KSP algorithm *[9]* and obtain a set of trajectories $\mathcal{T}$, and a set of shared vertices *S* as in section **3.3.1**. In practice, these shared vertices are the only points where an identity switch could occur and we therefore take the trajectory fragments connecting them to be our tracklets, as depicted by Fig. **4**, illustrating how trajectories are split into tracklets. On figure 4 (a), for simplicity, we represent the trajectories as being one-dimensional and assume that we have three of them. On figure 4 (b) each trajectory is a set of vertices from successive time instants. A different color may be assigned to each; here all the grid cells where the trajectory flows are marked in grey. On figure 4 (c) the neighborhoods *N* of the trajectories with a distance $\delta = 1$ are shown in a color similar to that of the trajectory but less saturated, here is lighter grey. The shared vertices S are those that are included in more than one neighborhood appear in black. They are used as splitting points. Figure 4 (d) shows the resulting tracklets. Note that two trajectories do not necessarily have to cross to be split; it is enough that they come close to each other.

Formally, each trajectory $\tau_q$ is split into tracklets $\tau q^{j} j = 1,...,j_q$, which are connected fragments of the trajectory. We therefore have

$$\forall q \ \tau_q = \bigcup_j \tau_q^j. \qquad (15)$$

We split a trajectory into tracklets by ensuring that, except for the end points, none of their vertices is in the neighborhood of a shared vertex. Let $T_q^j$ be the last time instant of tracklet $\tau_q^j$, then,

$$\forall q, i, j, t = T_q^j \iff \mathcal{N}(v_i(t) \in \tau_q^j) \cap \mathcal{S} \neq \emptyset. \qquad (16)$$

We now construct a graph $\mathcal{G}^* = (\mathcal{V}^*, \mathcal{E}^*)$ whose nodes

$$\mathcal{V}^* = \{\tau_q^j, q = 1,...,|\mathcal{T}|, j = 1,...,j_q\} \qquad (17)$$

are the tracklets. In addition, we introduce an edge between each pair of tracklets such that the first vertex of one tracklet is included in the neighborhood of the last one of the other. We write

$$\mathcal{E}^* = \{(\tau_q^j, \tau_{q'}^{j'}) \ \exists v_i(T_q^j) \in \tau_q^j, v_{i'}(t_{q'}^{j'}) \in \tau_{q'}^{j'}$$
$$\text{s.t.} \ (t_{q'}^{j'} = T_q^j + 1) \ \wedge \ (v_{i'}(t_{q'}^{j'}) \in \mathcal{N}(v_i(T_q^j))) \}. \qquad (18)$$

Here, $t_q^{j'}$ is the starting time instant of tracklet $\tau_q^{j'}$ and $T_q^j$ is the last time instant of tracklet $\tau_q^j$.

The resulting graph of tracklet $\mathcal{G}^*$ is a DAG. We formulate a set of linear constraints on this graph similar to those of Eq. (1) to (5) in section 3.1. An illustration of the resulting graph is shown in Fig. 5, where the tracklet-based multi-commodity network flow algorithm can be interpreted as finding paths from the source node to the sink node, on a multiple layer graph whose nodes are the tracklets. This graph has the same properties as in the modeling of Fig. 2 (b), however the number of vertices and edges is significantly smaller. The only difference is that in the MCNF version, each node represents one physical location at one time instant, whereas in the T-MCNF version, each node represents a tracklet, which is a set of successive locations in a batch of time frames.

We therefore modify the meaning of variable $m_j^{*l}$ to stand for the number of people of group $l$ present in tracklet $j$. Similarly, the variable $f_{i,j}^{*l}$ now corresponds to the edge $e_{i,j}^{*l}$, and encodes the number of people of group $l$ moving from tracklet $i$ to tracklet $j$.

To maximize the flow on this graph, for each tracklet $\tau_q^{j,l}$, we define a score $S(\tau_q^{j,l})$ as the sum of the appearance scores of the vertices of the full graph that form the tracklet. Formally, we write

$$\forall j, q, l \; S(\tau_q^{j,l}) = \sum_{v_k^l(t) \in \tau_q^{j,l}} \log(\varphi_k^l(t) L). \qquad (19)$$

Note that this score is similar to the sum of the scores of all the positions that compose the tracklet in the original objective function of the full layered grid (Eq. (10)). However, in the tracklet case we do not take detection probabilities into account, as they have already been used to construct the tracklets.

Our Tracklet-based Multi-Commodity Network Flow (T-MCNF) problem then becomes

$$\text{maximize} \sum_{l, i: j \in \mathcal{N}(i)} S(i) f_{i,j}^{*l} \qquad (20)$$

$$\text{subject to } \forall i, \sum_{j \in \mathcal{N}(i)} \sum_{l=1}^{L} f_{i,j}^{*l} \leq 1$$

$$\forall t, l, i, \sum_{j \in \mathcal{N}(i)} f_{i,j}^{*l} - \sum_{k: i \in \mathcal{N}(k)} f_{i,k}^{*l} \leq 0$$

$$\sum_{j \in \mathcal{N}(v_{source})} f_{v_{source},j}^{*} - \sum_{i: v_{sink} \in \mathcal{N}(k)} f_{i,v_{sink}}^{*} \leq 0$$

$$\forall t, l \sum_{\text{time } t \in i} \sum_{j \in \mathcal{N}(i)} f_{i,j}^{*l} \leq N_l$$

$$\forall l, i, j \; f_{i,j}^{*l} \geq 0 \;.$$

To obtain a feasible solution, we relax the IP problem of Eq. (20) to a Linear Programming problem, by allowing each flow to be assigned a value between 0 to 1 instead of a boolean value.

The T-MCNF graph is between one to two orders of magnitude smaller than the MCNF one. This results in a reduction of both computing time and memory consumption, while providing similar tracking results, as shown in Section 5.

## 4 EXPERIMENTS

We use multi-camera sequences acquired during soccer and basketball matches to validate our approach and compare it against the approach we extend [9], which completely ignores image appearance, and a modified version of it that takes frame-to-frame appearance into account, as described in [14]. Additionally, to compare our approach against other state-of-the-art ones, we test it on the PETS'09 benchmark dataset, which features pedestrians.

In the remainder of this section, we first describe these video sequences. We then discuss how we obtain image evidence and present our results.

The grid resolution, set to prevent an occupation of more than one person per cell, preferably defines a cell size of less than 100cm2, and typically 25 cm2.

**4.1 Datasets**

Team-sports players are hard to track reliably because they tend to converge towards the ball, often change their direction of travel abruptly, and wear the same uniforms when they belong to the same team. The only reliable way to identify them is to read the numbers on their shirts but, given the resolution of the images, this can only be done in relatively few frames. Furthermore, even though the color of the uniforms can be used to tell the teams apart, this information is hard to exploit at the most critical times, that is, when several players are bunched together.

Therefore, team sports sequences are among the most challenging in people tracking and we tested our approach on both basketball and soccer sequences, along with a standard pedestrian benchmarking dataset. The datasets are described in more detail below, and their parameters are summarized in Table 2 hereunder, showing the characteristics of the datasets used in our experiments.

TABLE 2

| Sequence | cameras | frames | people | groups | postions | entry-exit positions |
|---|---|---|---|---|---|---|
| APIDIS | 7 | 1500 | 12 | 3 | 9216 | 17 |
| FIBA MS | 6 | 4000 | 14 | 3 | 9216 | 0 |
| FIBA CB | 6 | 5500 | 15 | 3 | 9216 | 65 |
| ISSIA | 6 | 3000 | 25 | 5 | 33480 | 0 |
| PETS'09 | 6 | 795 | 10 | 2 | 10400 | 55 |

*4.1. Basketball - APIDIS*

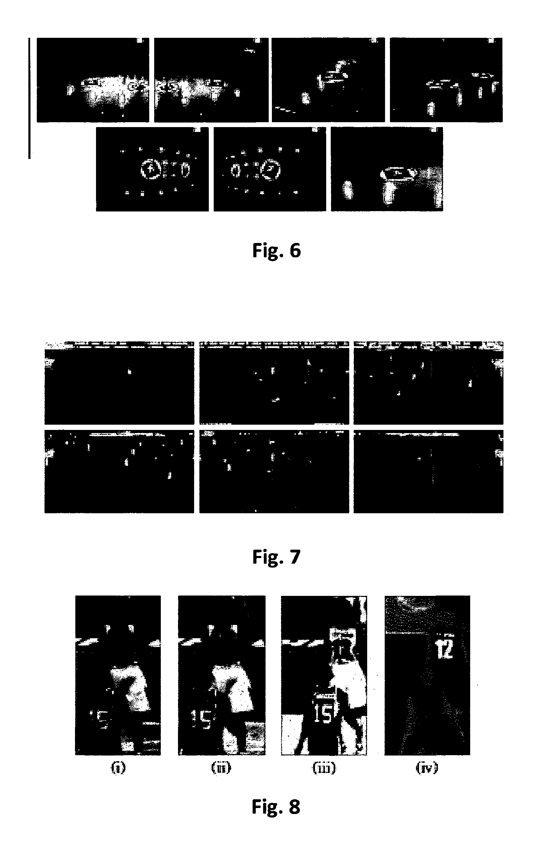

This publicly available dataset available at the URL http://www.apidis.org/Apidis consists of 7 cameras; 5 cameras located on the ground and two "fish-eye" cameras looking from above, all synchronized at 25 fps. This sequence consists of 1500 frames (one minute) of basketball match. There are 12 people in the court, 2 referees and two teams of 5 players each. The sequence is very challenging as the lightning conditions are difficult and there are many reflections and shadows. For this experiment we use the uniform colors as the appearance information, and three identity groups consist of the two teams and the referees. A sample of the dataset is presented in Fig. 6, showing the views of the seven cameras, i.e. the two "fish-eye" camera and five side-view cameras. Note that the lightning conditions are quite challenging.

*4.1.2 Soccer - ISSIA*

We use the publicly available ISSIA dataset *[53]*. It is made of 3,000 frames filmed by six cameras at a soccer match. There are 25 people, 3 referees and two teams of 11 players, including the goal keepers whose uniform is different from the one of their teammates. Due to the dataset resolution, the shirt numbers are unreadable. Hence, the appearance is based on shirt colors only. Similarly to *[54]*, we use 5 identity groups that we denote as *referees, team 1, team 2, goal keeper 1* and *goal keeper 2.* A sample of the dataset is presented in Fig. 7, showing the views of the six cameras used fortracking soccer players. three at each side of the field. As can be see there is only little overlap between cameras at the same side of the field.

*4.1.3 Pedestrians - PETS'09*

We use the publicly available PETS'09 dataset, available at the URL http://www.cvd.rdg.ac.uk/PETS2009 for which the performance of other algorithms has been published *[45]*. More specifically, we tested our method on the 800-frame sequence S2/L1, which is filmed by 7 cameras at 7 frames per second (fps), and features 10 people. In this sequence, the density of people is lower than in the sport datasets but most of the pedestrians wear similar dark clothes, which makes appearance-based identification very challenging. We therefore used only two appearance groups, one for people wearing dark clothes and the other for those wearing reddish ones.

*4.1.4 Basketball - FIBA*

We acquired several sequences at the 2010 FIBA World Championship for Women, using 8 cameras - 4 wide-angle ones, 2 looking from above, and 2 providing close-ups - filming at 25 fps. In a typical basketball match there are two teams of 5 players, 3 referees and 2 coaches. However, as there are players and referees which enter and exit the field of view of our cameras, we do not have any constraint about the number of players in each group.

For this dataset, we run four experiments: two on the match of (Mali vs. Senegal - MS), and two on a semi-final match (Czech Republic vs. Belarus - CB). All matches do not exhibit the same amount of challenges. In general they tend to be more difficult to track when getting closer to the final. For instance, in the semi-final, moving cameras were added, one above each basket. In addition, the amount of flashes and lightning difference also increased.

For each match, for the first experiment we use only color as appearance information, and the identity groups consist thus of two teams and referees. In the second experiment, we use number reading in addition to shirt colors, which allows to handle 11 groups - one per player and one group for the referees and coaches.

## 4.2 Appearance Information

We exploit two distinct sources of image information, the color of the uniforms and the numbers on the players shirts. This is done as follows.

### 4.2.1 Color Similarity

In order to estimate the correct number of groups and to have prototypes for each identity groups, we clustered the pedestrian detector results into groups. For each camera, based on the background subtraction, we extracted the foreground pixel in the bounding boxes corresponding to the detector results. We convert the foreground pixels within each box to the CIE-LAB color space, and use them to populate a $20 \times 20 \times 20$ color histogram. We repeat this process independently for each camera because they are not color calibrated.

Extracting color information from closely spaced people is unreliable because it is often difficult to correctly segment individuals. Thus, for each camera and at each time frame, we first compute an occlusion map based on the raw probability occupancy map: If a specific location is occluded with high probability in a given camera view, we do not use it in the clustering process. Similarly, at run time, we do not evaluate the color similarity of occluded persons.

We define the similarity between two color histograms using the Kullback-Leibter divergence

$$s(a, b) = \exp(-\mathrm{KL}(H_a, H_b)) \ . \quad (21)$$

Based on this similarity, we cluster the histograms into groups and obtain prototypes for each group (Templates). Finally, the similarity between this observed color histogram $O_{\text{colors}}$ and the templates $T_{\text{colors}}$ is computed as the average over the maximum matching scores from the non-occluded views $v$. We normalize this term in order to get a probability between 0 and 1

$$\varphi_i^{t,l} \propto \frac{\sum_v \exp(-\mathrm{KL}(T_{\text{colors}}, O_{\text{colors}}))}{|v|} \ . \quad (22)$$

If no appearance cue is available, due to occlusions for example, $\varphi_i^{t,l}$ is set to *1/L*.

### 4.2.2 Reading the Numbers

**[0075]** The numbers on the back of sports players are unique identifiers, and can be used to unambiguously recognize them. Within a team, the printed numbers usually share a unique color, which is well separated from the shirt color. Here we use this observation to develop a specific image binarization that improves number recognition. For every team, the shirt color $c_s$ and number color $c_n$ are obtained by clustering a shirt color patch into two clusters. Then, for each pixel we measure the distance between its color $c_p$ and these two colors: $d_s = ||c_s\text{-}c_p||, d_n = ||c_n - c_p||$. The converted gray-level pixel is defined as 255, which produces a white number on a black shirt. An illustration of this projection method is shown in Fig. (8), where part (i) is an original color image, part (ii) a gray-scaled image, part (iii) color projection using the two colors of the first color team, and part (iv) color projection using the two colors of the second -white- team. These projections allow us better recognitions.

Finally, we binarize those images.

As for group classification, we manually extract a template for every player beforehand. At run time, applying number recognition at every position of an image would be much too expensive. Instead, we rely on people detection to select candidate positions for number reading. For each candidate position, we trim the upper 1/5 part and the lower 1/5 part of the bounding box, which roughly correspond to the head of the player and his legs respectively. We then search for number candidates inside the reduced bounding box, by using XOR operation between the templates and observation patches with the same size.

We select the observation patch that gives us the maximum normalized sum of pixel-wise XOR between the template and the observation and write

$$\varphi_i^{t,l} \propto \frac{T_{\text{numbers}} \oplus O_{\text{numbers}}}{|T_{\text{numbers}}|} \qquad (23)$$

Since numbers cannot be read often, we favor highly confident detections. Therefore, we only keep scores that are higher than a threshold, 0.8 in our case. In other cases, we set $\varphi_i^{t,l}$ to a neutral value of *1/L.*

Although a manual initialization step is performed beforehand for recognizing colors and shirt numbers, it is also possible, in the frame of the present invention, to use unsupervised learning algorithms in order to learn automatically e.g. the colors of the shirts of a team and also the number of groups.

### 4.3 Implementation Details

Our system is implemented in C++ using standard libraries. To produce the Probability Occupancy Maps (POMs) we need as input, we use the publicly available POM software package available at the URL http://www.cvlab.epfl.ch/software/pom. It implements an algorithm that estimates ground plane occupancy from the binary output of a background subtraction algorithm in multiple images acquired simultaneously using calibrated cameras *[3]*. The linear programming problems were formulated and optimized using the MOSEK (http://www.mosek.com) solver. We used a 3GHz PC and utilized a single core, the running time and memory consumption are summarized in Table 3 in the results section. Using our T-MCNF algorithm it is practical to process whole batches at once, on a regular PC.

### 4.4 Baseline

As a baseline for comparison, we use the publicly available KSP tracker *[9],* that ignores appearance. Nevertheless, it has been shown to outperform many state-of-the-art methods on the PETS'09 dataset *[45]*. In addition, we use a modified version of the KSP that includes appearance information from frame to frame. This method we will refer to as *C-KSP* only differs from the original algorithm in the cost of the edges. It includes an appearance term $\zeta_{i,j}^{t}$ in addition to the detection term

$$c(e_{i,j}(t)) = -\log(\frac{\rho_i^t \zeta_{i,j}^t L}{1 - \rho_i^t}) \qquad (24)$$

The appearance term $\zeta_{i,j}^{t}$ is generated the same way as $\varphi_i^{t,l}$, between color histograms from two locations in successive frames, similarly to what is done in *[14]*.

Note that for that for some datasets, we could not fit the KSP grid in the memory therefore, we added a pruning scheme to the KSP as well. Using the POM detection results, we kept only the locations that were above a certain threshold $\rho_{thr} > 0.75$, in addition, we kept their spatio-temporal neighborhood. For a location with high probability to be occupied, the neighborhood is defined as all the cells that are proximate less than $N_{thr} = 4$ cells in time or space.

### 4.5 Evaluation Metrics

A standard metric for evaluating object trackers is the Multiple Object Tracking Accuracy *[55]* (MOTA), whose exact definition is

$$\text{MOTA} = 1 - \frac{\sum_t (c_m(m_t) + c_f(fp_t) + c_s(mme_t))}{\sum_t g_t} , \qquad (25)$$

where $g_t$ is the number of ground truth detections, $m_t$ the number of miss-detections, $fp_t$ the false positive count and $mme_t$ the number of *instantaneous* identity switches. According to *[56]*, the weighting functions are set to $c_m = c_f = 1$, and $c_s = \log 10$. While providing a reliable performance measure for generic tracking systems, this metric is not appropriate to evaluate applications for which identity preserving is crucial. Its *mme* term penalizes only instantaneous identity switches, that is the frame at which two trajectories are switched, but does not account for the proportion of a trajectory that is correctly labeled over a whole sequence.

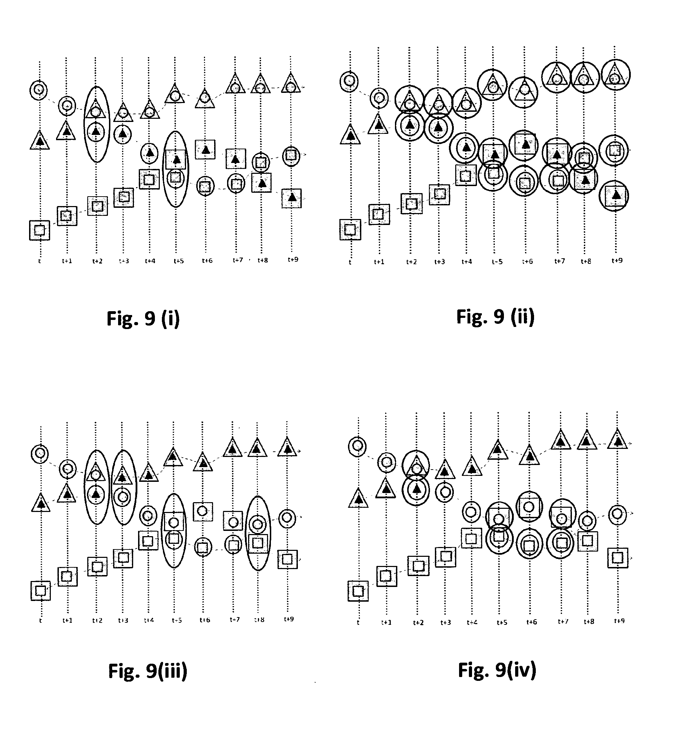

Therefore, we introduce a new term *gmme* for measuring the proportion of identity switches in a global manner. For every detection at every frame, the *gmme* term is incremented if the detection label does not correspond to the ground truth identity. Thus, a trajectory with an identity switch in the middle will be counted wrong for half of its length, instead of just once for the *mme,* as explained on Fig. 9, illustrating the difference between identity mismatch score *mme* and global identity mismatch score *gmme.* We apply the two scores on two fictional tracking results A and B: *mme* on Algorithm A on part (i) of figure 9, *gmme* on Algorithm A on part (ii) of figure 9, *mme* on Algorithm B on part (iii) of figure 9, and eventually *gmme* on Algorithm B on part (iv) of figure 9. The mismatches are circled. As can be seen, algorithm B manages to recover from its tracking mistakes, yet,its *mme* score is worse than the one of Algorithm A. Our proposed *gmme* score hence favors algorithms that preserve identities.

We therefore generate a new metric GMOTA standing for Global Multiple Object Tracking Accuracy, by replacing *mme* by *gmme* in MOTA, which yields

$$\text{GMOTA} = 1 - \frac{\sum_t (c_m(m_t) + c_f(fp_t) + c_a(gmme_t))}{\sum_t g_t} \quad (26)$$

For the sake of clarity, we will show results using both metrics and on each of their components m, *fp, mme* and *gmme,* in the results section.

In addition, the evaluation protocol of [55] only considers tracking results of a single camera. As we have multi-camera setups, we evaluate the accuracy of the tracking in the ground planes, instead of the planes of the cameras. Specifically, we set our distance criteria for a True Positive to be the distance of three grid cell, which is a distance of 75cm on the ground plane in the pedestrian and basketball cases and 100cm for the soccer one.

## 5 RESULTS

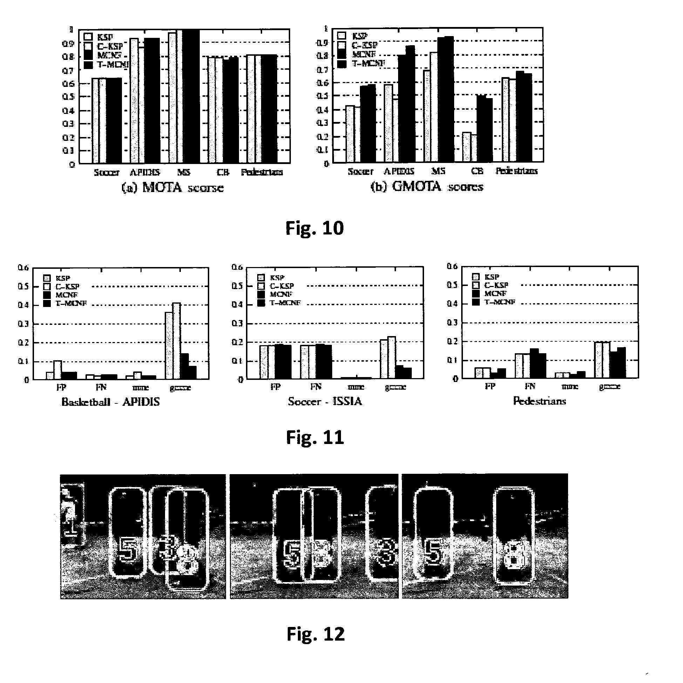

We ran the two versions of our algorithm, MCNF of Section **3.3.1** and T-MCNF of Section **3.3.2,** along with the KSP and C-KSP baselines on our five sequences. Fig. (10) depicts the results of the MCNF and T-MCNF according to the present invention evaluated using both the standard MOTA metric of Eq. (25) (on Fig. 10(a)) and our modified GMOTA metric of Eq. (26) )on Fig. 10(b). On figure 10(a), the MOTA scores are almost the same for all methods. This is because MOTA only considers instantaneous identity switches, and weights them by log 10. On figure 10(b), the GMOTA metric penalizes identity switches more than the MOTA metric. The results clearly indicates that the MCNF and T-MCNF methods preserve the identities much better than the two baselines (KSP and C-KSP). In those graphs, please note that higher values are better and the maximum is 1.

Using either metric, both MCNF and T-MCNF always do as well or better than KSP, which has itself been shown to outperform state-of-the-art methods on the PETS'09 sequence [45]. However, the difference is much more obvious on the GMOTA score, which is explicitly designed to penalize identity switches. As shown in Fig. 11, another way to show the better performance of the methods MCNF and T-MCNF against the baseline (KSP and C-KSP) is to individually plot the components of MOTA and GMOTA m, *fp, mme,* and *gmme,* wherein the miss detections mare referred to as "FN" standing for "false negative". In these three experiments, the appearance model is based on color similarity only. We plot separately each component of MOTA: the miss-detections and false positive rates *m/fn* and *fp,* the rate of instantaneous identity switches *mme,* and the rate of global identity mismatch score *gmme* introduced in Section **4.5.** While MOTA components (*fn, fp, mme)* are similar among all the four algorithms, MCNF and T-MCNF are much better at preserving identities, as reflected by the far lower *gmme* rates. In addition, the difference between these two and methods is not significant. Note that, for these scores, unlike in Figure 10, now the lower is better.

The performance C-KSP is more erratic. It improves over the KSP on the basketball data set, but performs slightly worse on the other datasets. This shows that a frame-by-frame appearance constraint cannot be depended upon to preserve identities over long periods of time.

In short, even though the *mme* term is low for all methods, which explains the similarity of the MOTA results, the more accurate *gmme* metric clearly indicates that our approach preserves identity much better than the two baselines. Note, however, that the improvement is more significant on the sport sequences than in the pedestrian ones. This is because, in the latter, people all wear clothes of relatively uniform color, which makes appearance information less discriminative and failures such as those of Fig. 12, where individuals 5 and 8 are switched because of similarly colored clothes more likely.

In the extreme case, if no appearance information were available, the result produced by our algorithm would be the same one as that of KSP.

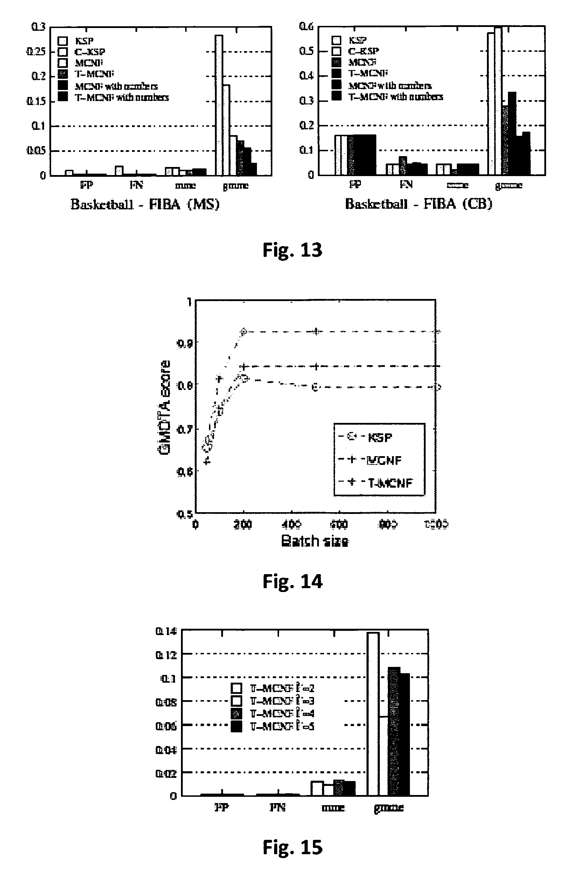

At the other end of the spectrum, Fig. 13 depicts what happens when using not only the color of the uniforms but also when being able to read the numbers on the players' shirts once in a while. In our experiments, the numbers can only be read once in every few hundreds of frames, in bursts of approximately 15 frames. In addition, based on the role of the players, some numbers are facing the zoomed camera much more than the others. Fig. 13 plots separately each component of MOTA: the miss-detections rates m also referred to here as false negative rates *fn,* false positive rate *fp,* the rate of instantaneous identity switches *mme,* and the rate of global identity mismatch *gmme.* Clearly, adding distinguishing identifiers, even sparsely, improves the preserving of the identities, as reflected by the lower *gmme* rates. As in figure 1, note that, for these scores, lower is better.

Furthermore, as shown in Figures 11 and 13, there is almost no difference between the tracking accuracy of the MCNF and the T-MCNF algorithms. However, T-MCNF is much faster and consumes far less memory, as can be seen in Table 3 hereunder, comparing between running time and memory consumption of MCNF and T-MCNF algorithms on the examined datasets.

TABLE 3

| Sequence | MCNF | | T-MCNF | |
|---|---|---|---|---|
| | Speed(fps) | Memory(MB) | Speed(fps) | Memory(MB) |
| PETS'09 | 255 | 2642 | 1370 | 7.5 |
| APIDIS | 44.2 | 677 | 1153 | 30 |
| FIBA MS | 3.1 | 4320 | 1277 | 104 |
| FIBA CB | 22.5 | 6332 | 863 | 1534 |
| ISSIA | 3.95 | 5285 | 187.5 | 117 |

All the results presented so far have been obtained by optimizing on whole sequences, which precludes real-time operations. If near real-time performance is required, for example so that results can be presented to spectators during a break in the action, the algorithm can be run on shorter but overlapping batches of frames. We have tried this approach on batches of 50,100,200,500 and 1000 frames, which implies a constant delay of 2,4,8,20 and 40 respectively. We stitched the resulting trajectories using the Hungarian algorithm *[57].* As shown in Fig. 14, tracking performances of varying batches sizes,this results in a slight degradation with respect to the scores of Fig. 10. However, having batches with more than 200 frames does not improve the results much. All methods present better tracking results using longer batches; however, short batches allows us to meet constraints on the time delay: this suggests that applying our approach to short overlapping batches is sufficient for obtaining excellent results, at the cost of few seconds delay.

Eventually, figure 15 shows the influence of the splitting threshold, in terms of numbers of cells (i.e. the neighborhood size parameter $\delta$ introduced in the table 1 of section **3),** using the FIBA dataset detailed in section **4.1.4.** It can be appreciated that a splitting threshold set to 3 cells delivers better results for this dataset.

Although this assessment has been performed based on a discrete number of cells varying between 2 and 5, it will be understood, however, that the value of the neighborhood size parameter $\delta$ can also take any given value in meters.

## 6 CONCLUSION

In the frame of the present invention, it has been shown that tracking multiple people whose paths may intersect can be formulated as a multi-commodity network flow problem (MCNF) This global optimization framework for multi-people tracking that takes image-appearance cues into account, even if they are only available at distance time intervals in order to prevent identity switches;. this is unlike many current approaches that depend on appearance being exploitable from frame to frame. We have shown that by formalizing people's displacements as flows along the edges of a graph of spatio-temporal locations and appearance groups, we can reduce this difficult estimation problem to a standard Linear Programming one. As a result, it does better at preserving identity over very long sequences than previous approaches, while properly handling entrances into the scene and exits from it. Yet in order to lend itself for real-time implementation, the complexity of the multi-layered graph used needed to be simplified.

By grouping spatio-temporal locations intro tracklets, yielding the T-MCNF (tracklet multi-commodity network flow problem framework) we can substantially reduce the size of the Linear Program. This yields processing times on an ordinary computer that are short enough for practical applications, such as producing statistics of team-sport players' performance in real-time during matches.

Our approach has been validated on three publicly available datasets; APIDIS basketball dataset, ISSIA soccer dataset and the PETS'09 pedestrian dataset, all contain long and complex sequences. In addition, this approach was proven to be effective on a new basketball dataset, consists of full world championship basketball matches. In all cases, the MCNF and T-MCNF approach preserves identity better then the state-of-the-art tracking algorithms, while the T-MCNF proves to be much more efficient.

## REFERENCES

[1] M. Breitenstein, F. Reichlin, B. Leibe, E. Koller-Meier, and L. Van Gool, "Online Multi-Person Tracking-By-Detection from a Single Uncalibrated Camera," PAMI, vol. 99, 2010.

[2] J. Wolf, A. Viterbi, and G. Dixon, "Finding the Best Set of K Paths through a Trellis with Application to Multitarget Tracking," IEEE Transactions on Aerospace and Electronic Systems, vol. 25, no. 2, pp. 287-296, March 1989.

[3] F. Fleuret, J. Berclaz, R. Lengagne, and P. Fua, "Multi-Camera People Tracking with a Probabilistic Occupancy Map," PAMI, vol. 30, no. 2, pp. 267-282, February 2008.

[4] P. P. A. Storms and F. C. R. Spieksma, "An LP-Based Algorithm for the Data Association Problem in Multitarget Tracking," Computers & Operations Research, vol. 30, no. 7, pp. 1067-1085, June 2003.

[5] H. Jiang, S. Fels, and J. Little, "A Linear Programming Approach for Multiple Object Tracking," in CVPR, 2007, pp. 744-750.

[6] A. Perera, C. Srinivas, A. Hoogs, G. Brooksby, and H. Wensheng, "Multi-Object Tracking through Simultaneous Long Occlusions and Split-Merge Conditions," in CVPR, June 2006, pp. 666-673.

[7] L. Zhang, Y. Li, and R. Nevatia, "Global Data Association for Multi-Object Tracking Using Network Flows," in CVPR, 2008.

[8] H. Pirsiavash, D. Ramanan, and C. Fowlkes, "Globally-Optimal Greedy Algorithms for Tracking a Variable Number of Objects," in CVPR, June 2011.

[9] J. Berclaz, F. Fleuret, E. Turetken, and P. Fua, "Multiple Object Tracking Using K-Shortest Paths Optimization," PAMI, vol. 33, pp. 1806-1819, September 2011.

[10] J. W. Suurballe, "Disjoint Paths in a Network," Networks, vol. 4, pp. 125-145, 1974.

[11] T. Misu, A. Matsui, S. Clippingdale, M. Fujii, and N. Yagi, "Probabilistic Integration of Tracking and Recognition of Soccer Players," in Advances in Multimedia Modeling, 2009, pp. 39-50.

[12] H. B. Shitrit, J. Berclaz, F. Fleuret, and P. Fua, "Tracking Multiple People Under Global Apperance Constraints," in ICCV, 2011.

[13] M. Andriluka, S. Roth, and B. Schiele, "People-Tracking-By-Detection and People-Detection-By-Tracking," in CVPR, June 2008.

[14] A. Andriyenko and K. Schindler, "Globally Optimal Multi-Target Tracking on a Hexagonal Lattice," in ECCV, 2010, pp. 466-479.

[15] S. Blackman, Multiple-Target Tracking with Radar Applications. Artech House, 1986.

[16] J. Black, T. Ellis, and P. Rosin, "Multi-View Image Surveillance and Tracking," in IEEE Workshop on Motion and Video Computing, 2002.

[17] A. Mittal and L. Davis, "M2Tracker: A Multi-View Approach to Segmenting and Tracking People in a Cluttered Scene," IJCV, vol. 51(3), pp. 189-203, 2003.

[18] S. Iwase and H. Saito, "Parallel Tracking of All Soccer Players by Integrating Detected Positions in Multiple View Images," in ICPR, August 2004, pp. 751-754.

[19] M. Xu, J. Orwell, and G. Jones, "Tracking Football Players with Multiple Cameras," in ICIP, October 2004, pp. 2909-2912.

[20] D. R. Magee, "Tracking Multiple Vehicles Using Foreground, Background and Motion Models," Image and Vision Computing, vol. 22, no. 2, pp. 143-155, February 2004.

[21] J. Giebel, D. Gavrila, and C. Schnorr, "A Bayesian Framework for Multi-Cue 3D Object Tracking," in ECCV, 2004.

[22] K. Smith, D. Gatica-Perez, and J.-M. Odobez, "Using Particles to Track Varying Numbers of Interacting People," in CVPR, 2005.

[23] K. Okuma, A. Taleghani, N. de Freitas, J. Little, and D. Lowe, "A Boosted Particle Filter: Multitarget Detection and Tracking," in ECCV, May 2004.

[24] Z. Khan, T. Balch, and F. Dellaert, "MCMC-Based Particle Filtering for Tracking a Variable Number of Interacting Targets," PAMI, vol. 27, no. 11, pp. 1805-1918, 2005.

[25] C. Yang, R. Duraiswami, and L. Davis, "Fast Multiple Object Tracking via a Hierarchical Particle Filter," in ICCV, 2005.

[26] T. Mauthner, M. Donoser, and H. Bischof, "Robust Tracking of Spatial Related Components," in ICPR, 2008.

[27] E. Maggio, M. Taj, and A. Cavallaro, "Efficient Multi-Target Visual Tracking Using Random Finite Sets," IEEE Transactions On Circuits And Systems For Video Technology, vol. 18, no. 8, pp. 1016-1027, August 2008.

[28] R. Hess and A. Fern, "Discriminatively Trained Particle Filters for Complex Multi-Object Tracking," in CVPR, 2009.

[29] D. B. Reid, "An Algorithm for Tracking Multiple Targets," IEEE Transactions on Automatic Control, December 1979.

[30] S. Oh, S. Russell, and S. Sastry, "Markov Chain Monte Carlo Data Association for General Multiple-Target Tracking Problems," in Decision and Control, 2004. CDC. 43rd IEEE Conference on, 2004.

[31] W. Ge and R. T. Collins, "Multi-Target Data Association by Tracklets with Unsupervised Parameter Estimation," in BMVC, September 2008.

[32] C. Wojek, S. Walk, S. Roth, and B. Schiele, "Monocular 3D Scene Understanding with Explicit Occlusion Reasoning," in CVPR, 2011.

[33] C. Wojek, S. Walk, S. Roth, , K. Schindler, and B. Schiele, "Monocular Visual Scene Understanding: Understanding Multi-Object Traffic Scenes," PAMI, In press.

[34] S. W. Joo and R. Chellappa, "A Multiple-Hypothesis Approach for Multiobject Visual Tracking," IEEE Transactions on Image Processing, 2007.

[35] V. K. Singh, B. Wu, and R. Nevatia, "Pedestrian Tracking by Associating Tracklets Using Detection Residuals," IEEE Workshop on Motion and Video Computing, pp. 1-8, 2008.

[36] Y. Li, C. Huang, and R. Nevatia, "Learning to Associate: Hybridboosted Multi-Target Tracker for Crowded Scene," in CVPR, June 2009.

[37] C.-H. Kuo, C. Huang, and R. Nevatia, "Multi-Target Tracking by On-Line Learned Discriminative Appearance Models," CVPR, 2010.

[38] C.-H. Kuo and R. Nevatia, "How Does Person Identity Recognition Help Multi-Person Tracking?" CVPR, 2011.

[39] J. Shin, L. J. Guibas, and F. Zhao, "A Distributed Algorithm for Managing Multi-Target Identities in Wireless Ad-Hoc Sensor Networks Information Processing in Sensor Networks," 2003.

[40] R. Kondor, A. Howard, and T. Jebara, "Multi-Object Tracking with Representations of the Symmetric Group," in In AISTATS, 2007.

[41] J. Huang, C. Guestrin, and L. Guibas, "Fourier Theoretic Probabilistic Inference Over Permutations," JMLR, 2009.

[42] J. F. Henriques, R.Caseiro, and J. Batista, "Globally Optimal Solution to Multi-Object Tracking with Merged Measurements," in ICCV, 2011.

[43] B. Yang, C. Huang, and R. Nevatia, "Learning Affinities and Dependencies for Multi-Target Tracking using a CRF Model," in CVPR, 2011.

[44] B. Yang and R. Nevatia, "An Online Learned CRF Model for Multi-Target Tracking," in CVPR, 2012.

[45] A. Ellis, A. Shahrokni, and J. Ferryman, "Pets 2009 and Winter Pets 2009 Results, a Combined Evaluation," in PETS, December 2009.

[46] Z. Wu, A. Thangali, S. Sclaroff, and M. Betke, "Coupling Detection and Data Association for Multiple Object Tracking," in CVPR, 2012.

[47] L. Leal-Taixe, G. Pons-Moll, and B. Rosenhahn, "Branch-And-Price Global Optimization for Multi-View Multi-Target Tracking," in CVPR, 2012.

[48] D. Delannay, N. Danhier, and C. Vleeschouwer, "Detection and Recognition of Sports(wo)men from Multiple Views," in ICDSC, August 2009, pp. 1-7.

[49] W.-L. Lu, J.-A. Ting, K. P. Murphy, and J. J. Little, "Identifying Players in Broadcast Sports Videos Using Conditional Random Fields," in CVPR, 2011.

[50] C. Li, S. T. McCormick, and D. Simchi-Levi, "Finding disjoint paths with different path-costs: Complexity and algorithms," Networks, 1992.

[51] M. S. Bazaraa, J. J. Jarvis, and H. D. Sherali, Linear Programming and Network Flows. John Wiley & Sons, 2010.

[52] D. Choi and I. Choi, "On the Effectiveness of the Linear Programming Relaxation of the 0-1 Multi-Commodity Minimum Cost Network Flow Problem." in COCOON, 2006.

[53] T. D'Orazio, M. Leo, N. Mosca, P. Spagnolo, and P. L. Mazzeo, "A Semi-Automatic System for Ground Truth Generation of Soccer Video Sequences," in IEEE International Conference on Advanced Video and Signal Based Surveillance, 2009, pp. 559-564.

[54] C. Poppe, S. D. Bruyne, S. Verstockt, and R. V. de Walle, "Multi-Camera Analysis of Soccer Sequences," in International Conference on Advanced Video and Signal Based Surveillance, 2010.

[55] K. Bernardin and R. Stiefelhagen, "Evaluating Multiple Object Tracking Performance: the Clear Mot Metrics," EURASIP Journal on Image and Video Processing, vol. 2008, 2008.

[56] R. Kasturi, D. Goldgof, P. Soundararajan, V. Manohar, J. Garofolo, M. Boonstra, V. Korzhova, and J. Zhang, "Framework for Performance Evaluation of Face, Text, and Vehicle Detection and Tracking in Video: Data, Metrics, and Protocol," PAMI, vol. 31, no. 2, pp. 319-336, February 2009.

[57] H. W. Kuhn, "The Hungarian Method for the Assignment Problem," Naval Research Logistics Quarterly, 1955.

## Claims

1. Method for continuously tracking multiple people while preserving identities under global appearance constraints, wherein people's trajectories may intersect, and wherein only sparse appearance information is available, comprising the steps of:

- choosing an area of interest to be filmed;
- discretize said area into a grid with K cells;
- partition the number N of tracked people into L groups;
- assign separate appearance information models for each group;
- filming video sequences with a plurality of cameras, providing frames at a rate R superior to one per second, and extract appearance information, wherever available;
- generate a probability occupancy map (POM) for said area, wherein said POM contains the probability of presence of people in each grid cell at T consecutive instants corresponding to each frame of the filmed sequences;
- compute trajectories using a K-shortest path algorithm based on a K*T*L Direct Acyclic Graph (DAG) modeling, wherein presence and flow constraints (1)-(5) are set for each node of the graph;

and finally

- derive individual trajectories for each group identity by solving a layered tracklet-based multi-commodity flow (T-MCNF) programming problem (20), wherein tracklets are connected parts of splitted trajectories, wherein each trajectory is split at positions which are in the neighborhood of another, wherein said neighborhood encompasses locations within a predefined distance.

2. Method according to claim 1, wherein the distance metric determining the splitting threshold is a number of cells, wherein said number of cells is comprised between 2 and 5.

3. Method according to claim 1 or 2, wherein each group can be identified by appearance information comprising colors and numbers in order to avoid identity swaps, wherein an appearance model (7) relying on such information is computed in order to estimate the probability of presence of a given person at a given time in a given cell, wherein these probabilities are used in order to compute a score for each tracklet (19), and that the linear programming problem maximizes a function depending of said scores.

4. Method according to any of the previous claims, wherein the area of interest is a sports field, wherein the number N of tracked people is made up by the total amount of players of each team and the referees, groups can be a team or a subset of players, that can be identified by a color and/or a shirt number, wherein the number of cameras is comprised between 6 and 8 depending on the game, wherein the total number of frames is comprised within 100 and 1000, the filming rate between 7 and 25 frames per second, the size of each cell is less than 100cm2, and the average processing time is above 100 frames by second using a 3 GHz computer.

5. Method according to any of the previous claims, wherein each camera is color calibrated for color similarity estimation, and wherein templates are provided for each player for reading their shirt number.

6. Method according to any of claims 1 to 4, wherein unsupervised algorithms are used for color clustering and thus removing the need for manual initialization.

7. Method according to any of the previous claims, wherein said layered tracklet-based multi-commodity flow (T-MCNF) programming problem (20) introduces a dual multiple layered directed acyclic graph (DAG) whose dual nodes (17) are the tracklets, and whose size is equal to the number of groups L.

8. Method according to claim 7, wherein edges (18) are introduced between each pair of tracklets such that the beginning or the end of a tracklet is always located in the neighborhood of another tracklet.

**Patentansprüche**

1. Verfahren zum kontinuierlichen Verfolgen von mehreren Personen, während die Identitäten unter globalen Erscheinungseinschränkungen bewahrt werden, wobei sich die Bewegungsbahnen der Personen kreuzen können und wobei nur spärliche Erscheinungsinformationen verfügbar sind, das die Schritte umfasst:

- Wählen eines interessierenden Bereichs, der zu filmen ist;
- Diskretisieren des Bereichs in ein Gitter mit K Zellen;
- Aufteilen der Anzahl N von verfolgten Personen in L Gruppen;

- Zuordnen von getrennten Erscheinungsinformationsmodellen für jede Gruppe;
- Filmen von Videosequenzen mit mehreren Kameras, die Vollbilder mit einer Rate R liefern, die größer als Eins pro Sekunde ist, und Erscheinungsinformationen, wo immer verfügbar, extrahieren;
- Erzeugen einer Wahrscheinlichkeitsbelegungskarte (POM) für den Bereich, wobei die POM die Wahrscheinlichkeit der Anwesenheit von Personen in jeder Gitterzelle zu T aufeinanderfolgenden Momenten, die jedem Vollbild der gefilmten Sequenzen entsprechen, enthält;
- Berechnen von Bewegungsbahnen unter Verwendung eines Algorithmus des K-kürzesten-Wegs anhand einer K*T*L-Modellierung eines gerichteten azyklischen Graphen (DAG-Modellierung), wobei Anwesenheits- und Flusseinschränkungen (1)-(5) für jeden Knoten des Graphen eingestellt sind;

und schließlich

- Ableiten von einzelnen Bewegungsbahnen für jede Gruppenidentität durch Lösen eines "Tracklet"-basierten Mehrwarenflussprogrammierproblems (T-MCNF-Programmierproblems) (20), wobei "Tracklets" verbundene Teile von aufgeteilten Bewegungsbahnen sind, wobei jede Bewegungsbahn an Positionen geteilt wird, die in gegenseitiger Nachbarschaft liegen, wobei die Nachbarschaft Orte innerhalb eines vordefinierten Abstands umfasst.

2. Verfahren nach Anspruch 1, wobei die Abstandsmetrik, die den Aufteilungsschwellenwert definiert, eine Anzahl von Zellen ist, wobei die Anzahl von Zellen zwischen 2 und 5 liegt.

3. Verfahren nach Anspruch 1 oder 2, wobei jede Gruppe durch Erscheinungsinformationen identifiziert werden kann, die Farben und Zahlen umfassen, um Identitätswechsel zu vermeiden, wobei ein Erscheinungsmodell (7), das auf derartigen Informationen beruht, berechnet wird, um die Wahrscheinlichkeit der Anwesenheit einer gegebenen Person zu einer gegebenen Zeit in einer gegebenen Zelle zu schätzen, wobei diese Wahrscheinlichkeiten verwendet werden, um einen Punktestand für jedes "Tracklet" (19) zu berechnen, und dass das lineare Programmierproblem eine Funktion maximiert, die von den Punkteständen abhängt.

4. Verfahren nach einem der vorhergehenden Ansprüche, wobei der interessierende Bereich ein Sportfeld ist, wobei die Anzahl N von verfolgten Personen durch den gesamten Betrag von Spielern eines jeden Teams und den Schiedsrichtern zusammengesetzt ist, wobei Gruppen ein Team oder eine Untergruppe von Spielern sein können, die durch eine Farbe und/oder eine Hemdnummer identifiziert werden können, wobei die Anzahl der Kameras abhängig von dem Spiel zwischen 6 und 8 liegt, wobei die gesamte Anzahl der Vollbilder zwischen 100 und 1000 liegt, wobei die Filmrate zwischen 7 und 25 Vollbilder pro Sekunde liegt, wobei die Größe einer jeden Zelle kleiner als 100 cm$^2$ ist und die mittlere Verarbeitungszeit bei Verwendung eines 3 GHz-Computers über 100 Vollbilder pro Sekunde beträgt.

5. Verfahren nach einem der vorhergehenden Ansprüche, wobei jede Kamera für eine Farbgleichheitsschätzung farbkalibriert ist und wobei Vorlagen für jeden Spieler zum Lesen seiner Hemdnummer vorgesehen sind.

6. Verfahren nach einem der Ansprüche 1 bis 4, wobei nicht überwachte Algorithmen für Farb-Clustering und dadurch Entfernen des Bedarfs einer manuellen Initialisierung verwendet werden.

7. Verfahren nach einem der vorhergehenden Ansprüche, wobei das geschichtete "Tracklet"-basierte Mehrwarenflussprogrammierproblem (T-MCNF-Programmierproblem) (20) einen dualen mehrgeschichteten gerichteten azyklischen Graphen (DAG-Graphen) einführt, dessen duale Knoten (17) die "Tracklets" sind und dessen Größe gleich der Anzahl der Gruppen L ist.

8. Verfahren nach Anspruch 7, wobei Kanten (18) zwischen jedem Paar "Tracklets" derart eingeführt werden, dass sich der Anfang oder das Ende eines "Tracklets" immer in der Nachbarschaft eines anderen Tracklets befindet.

**Revendications**

1. Procédé pour suivre en continu plusieurs personnes en préservant les identités sous des contraintes d'apparence globale, pour lequel les trajectoires des personnes peuvent se croiser, et pour lequel des informations d'apparence ne sont disponibles que sporadiquement, comprenant les étapes de :

- choisir une zone d'intérêt à filmer;

- discrétiser ladite zone dans une grille avec K cellules;
- partitionner le nombre N de personnes suivies dans L groupes;
- assigner des modèles distincts d'information d'apparence pour chaque groupe;
- filmer des séquences vidéo avec plusieurs caméras, fournir des cadres à un débit R supérieur à un par seconde, et extraire l'information d'apparence, si disponible;
- générer une carte d'occupation probabiliste (POM) pour ladite zone, pour lequel ladite carte d'occupation probabiliste contient la probabilité de présence des personnes dans chaque cellule de la grille à T instants consécutifs correspondant à chaque cadre des séquences filmées;
- calculer des trajectoires en utilisant un algorithme à K chemins les plus courts sur la base d'un modèle de graphe orienté acyclique $K \cdot T \cdot L$ (DAG) pour lequel les contraintes (1)-(5) de présence et de flux sont établies pour chaque noeud du graphe;

et finalement

- déduire des trajectoires individuelles pour chaque identité de groupe en résolvant un problème de programmation (20) d'un flux de multiple commodités sur la base de mini-trajectoires par niveau (T-MCNF), pour lequel les mini-trajectoires sont des parties connectées de trajectoires partielles, pour lequel chaque trajectoire partielle s'arrête au niveau des positions qui sont dans le voisinage l'une de l'autre, ledit voisinage étant défini comme comprenant des positions à l'intérieur d'une distance prédéfinie.

2. Procédé selon la revendication 1, pour lequel la métrique de distance déterminant le seuil de séparation des trajectoires partielles est un nombre de cellules, pour lequel ledit nombre de cellules est compris entre 2 et 5.

3. Procédé selon la revendication 1 ou 2, pour lequel chaque groupe peut être identifié par une information d'apparence comprenant des couleurs et des nombres pour éviter des interversions d'identité, pour lequel un modèle d'apparence (7) se basant sur une telle information est calculé pour estimer la probabilité de présence d'une personne donnée à un temps donné dans une cellule donnée, pour lequel ces probabilités sont utilisées pour calculer un score pour chaque mini-trajectoire (19), et pour lequel le problème de programmation linéaire maximise une fonction dépendante desdits scores.

4. Procédé selon l'une des revendications précédentes, la zone d'intérêt étant un terrain de sport, le nombre N de personnes suivies étant formé par le nombre total de joueurs de chaque équipe et les arbitres, les groupes pouvant être une équipe ou un sous-ensemble de joueurs, qui peuvent être identifiés par une couleur et/ou un numéro de maillot, le nombre de caméras étant compris entre 6 et 8 dépendant du jeu, le nombre total d'images étant compris entre 100 et 1000, le débit de filmage entre 7 et 25 images par seconde, la taille de chaque cellule étant plus petite que 100 cm$^2$, et le temps de traitement moyen est au-dessus de 100 images par seconde en utilisant un processeur à 3 GHz.

5. Procédé selon l'une des revendications précédentes, pour lequel chaque caméra est calibrée en couleurs pour une estimation de similitude de couleurs, et pour lequel des modèles sont fournis pour chaque joueur afin de lire leur numéro de maillot.

6. Procédé selon l'une des revendications 1 à 4, pour lequel des algorithmes non supervisés sont utilisés pour regrouper les couleurs et ainsi supprimer le besoin d'une initialisation manuelle.

7. Procédé selon l'une des revendications précédentes, pour lequel ledit problème de programmation (20) d'un flux de multiple commodités sur la base de mini-trajectoires par niveau (T-MCNF) fait intervenir un graphe acyclique direct multiple dual à plusieurs niveaux et dont les doubles noeuds (17) sont les mini-trajectoires, et dont la taille est égale au nombre L de groupes.

8. Procédé selon la revendication 7, pour lequel des bords (18) sont introduits entre chaque paire de mini-trajectoires, telle que le début ou la fin d'une mini-trajectoire est toujours situé dans le voisinage d'une autre mini-trajectoire.

Fig. 1

Fig.2

**Fig.3**

**Fig. 5**

**Fig. 4a**

**Fig. 4b**

**Fig. 4c**

**Fig. 4d**

Fig. 6

Fig. 7

(i)        (ii)        (iii)        (iv)

Fig. 8

**Fig. 9 (i)**

**Fig. 9 (ii)**

**Fig. 9(iii)**

**Fig. 9(iv)**

(a) MOTA scorse  (b) GMOTA scores

**Fig. 10**

Basketball - APIDIS  Soccer - ISSIA  Pedestrians

**Fig. 11**

**Fig. 12**

**Fig. 13**

**Fig. 14**

**Fig. 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. BREITENSTEIN ; F. REICHLIN ; B. LEIBE ; E. KOLLER-MEIER ; L. VAN GOOL.** Online Multi-Person Tracking-By-Detection from a Single Uncalibrated Camera. *PAMI,* 2010, vol. 99
- **J. WOLF ; A. VITERBI ; G. DIXON.** Finding the Best Set of K Paths through a Trellis with Application to Multitarget Tracking. *IEEE Transactions on Aerospace and Electronic Systems,* March 1989, vol. 25 (2), 287-296
- **FLEURET, J. BERCLAZ ; R. LENGAGNE ; P. FUA.** Multi-Camera People Tracking with a Probabilistic Occupancy Map. *PAMI,* February 2008, vol. 30 (2), 267-282
- **P. P. A. STORMS ; F. C. R. SPIEKSMA.** An LP-Based Algorithm for the Data Association Problem in Multitarget Tracking. *Computers & Operations Research,* June 2003, vol. 30 (7), 1067-1085
- **H. JIANG ; S. FELS ; J. LITTLE.** A Linear Programming Approach for Multiple Object Tracking. *CVPR,* 2007, 744-750
- **A. PERERA ; C. SRINIVAS ; A. HOOGS ; G. BROOKSBY ; H. WENSHENG.** Multi-Object Tracking through Simultaneous Long Occlusions and Split-Merge Conditions. *CVPR,* June 2006, 666-673
- **L. ZHANG ; Y. LI ; R. NEVATIA.** Global Data Association for Multi-Object Tracking Using Network Flows. *CVPR,* 2008
- **H. PIRSIAVASH ; D. RAMANAN ; C. FOWLKES.** Globally-Optimal Greedy Algorithms for Tracking a Variable Number of Objects. *CVPR,* June 2011
- **J. BERCLAZ ; F. FLEURET ; E. TURETKEN ; P. FUA.** Multiple Object Tracking Using K-Shortest Paths Optimization. *PAMI,* September 2011, vol. 33, 1806-1819
- **J. W. SUURBALLE.** Disjoint Paths in a Network. *Networks,* 1974, vol. 4, 125-145
- **T. MISU ; A. MATSUI ; S. CLIPPINGDALE ; M. FUJII ; N. YAGI.** Probabilistic Integration of Tracking and Recognition of Soccer Players. *Advances in Multimedia Modeling,* 2009, 39-50
- **H. B. SHITRIT ; J. BERCLAZ ; F. FLEURET ; P. FUA.** Tracking Multiple People Under Global Apperance Constraints. *ICCV,* 2011
- **M. ANDRILUKA ; S. ROTH ; B. SCHIELE.** People-Tracking-By-Detection and People-Detection-By-Tracking. *CVPR,* June 2008

- **A. ANDRIYENKO ; K. SCHINDLER.** Globally Optimal Multi-Target Tracking on a Hexagonal Lattice. *ECCV,* 2010, 466-479
- **S. BLACKMAN.** Multiple-Target Tracking with Radar Applications. Artech House, 1986
- **J. BLACK ; T. ELLIS ; P. ROSIN.** Multi-View Image Surveillance and Tracking. *IEEE Workshop on Motion and Video Computing,* 2002
- **A. MITTAL ; L. DAVIS.** M2Tracker: A Multi-View Approach to Segmenting and Tracking People in a Cluttered Scene. *IJCV,* 2003, vol. 51 (3), 189-203
- **S. IWASE ; H. SAITO.** Parallel Tracking of All Soccer Players by Integrating Detected Positions in Multiple View Images. *ICPR,* August 2004, 751-754
- **M. XU ; J. ORWELL ; G. JONES.** Tracking Football Players with Multiple Cameras. *ICIP,* October 2004, 2909-2912
- **D. R. MAGEE.** Tracking Multiple Vehicles Using Foreground, Background and Motion Models. *Image and Vision Computing,* February 2004, vol. 22 (2), 143-155
- **GIEBEL, D. GAVRILA ; C. SCHNORR.** A Bayesian Framework for Multi-Cue 3D Object Tracking. *ECCV,* 2004
- **K. SMITH ; D. GATICA-PEREZ ; J.-M. ODOBEZ.** Using Particles to Track Varying Numbers of Interacting People. *CVPR,* 2005
- **K. OKUMA ; A. TALEGHANI ; N. DE FREITAS ; J. LITTLE ; D. LOWE.** A Boosted Particle Filter: Multitarget Detection and Tracking. *ECCV,* May 2004
- **Z. KHAN ; T. BALCH ; F. DELLAERT.** MCMC-Based Particle Filtering for Tracking a Variable Number of Interacting Targets. *PAMI,* 2005, vol. 27 (11), 1805-1918
- **C. YANG ; R. DURAISWAMI ; L. DAVIS.** Fast Multiple Object Tracking via a Hierarchical Particle Filter. *ICCV,* 2005
- **T. MAUTHNER ; M. DONOSER ; H. BISCHOF.** Robust Tracking of Spatial Related Components. *ICPR,* 2008
- **E. MAGGIO ; M. TAJ ; A. CAVALLARO.** Efficient Multi-Target Visual Tracking Using Random Finite Sets. *IEEE Transactions On Circuits And Systems For Video Technology,* August 2008, vol. 18 (8), 1016-1027
- **R. HESS ; A. FERN.** Discriminatively Trained Particle Filters for Complex Multi-Object Tracking. *CVPR,* 2009

- **D. B. REID.** An Algorithm for Tracking Multiple Targets. *IEEE Transactions on Automatic Control,* December 1979
- **S. OH ; S. RUSSELL ; S. SASTRY.** Markov Chain Monte Carlo Data Association for General Multiple-Target Tracking Problems. *Decision and Control, 2004. CDC. 43rd IEEE Conference,* 2004
- **W. GE ; R. T. COLLINS.** Multi-Target Data Association by Tracklets with Unsupervised Parameter Estimation. *BMVC,* September 2008
- **C. WOJEK ; S. WALK ; S. ROTH ; B. SCHIELE.** Monocular 3D Scene Understanding with Explicit Occlusion Reasoning. *CVPR,* 2011
- **C. WOJEK ; S. WALK ; S. ROTH ; K. SCHINDLER ; B. SCHIELE.** Monocular Visual Scene Understanding: Understanding Multi-Object Traffic Scenes. *PAMI*
- **S. W. JOO ; R. CHELLAPPA.** A Multiple-Hypothesis Approach for Multiobject Visual Tracking. *IEEE Transactions on Image Processing,* 2007
- **V. K. SINGH ; B. WU ; R. NEVATIA.** Pedestrian Tracking by Associating Tracklets Using Detection Residuals. *IEEE Workshop on Motion and Video Computing,* 2008, 1-8
- **Y. LI ; C. HUANG ; R. NEVATIA.** Learning to Associate: Hybridboosted Multi-Target Tracker for Crowded Scene. *CVPR,* June 2009
- **C.-H. KUO ; C. HUANG ; R. NEVATIA.** Multi-Target Tracking by On-Line Learned Discriminative Appearance Models. *CVPR,* 2010
- **C.-H. KUO ; R. NEVATIA.** How Does Person Identity Recognition Help Multi-Person Tracking?. *CVPR,* 2011
- **J. SHIN ; L. J. GUIBAS ; F. ZHAO.** *A Distributed Algorithm for Managing Multi-Target Identities in Wireless Ad-Hoc Sensor Networks Information Processing in Sensor Networks,* 2003
- **R. KONDOR ; A. HOWARD ; T. JEBARA.** Multi-Object Tracking with Representations of the Symmetric Group. *AISTATS,* 2007
- **J. HUANG ; C. GUESTRIN ; L. GUIBAS.** Fourier Theoretic Probabilistic Inference Over Permutations. *JMLR,* 2009
- **J. F. HENRIQUES ; R.CASEIRO ; J. BATISTA.** Globally Optimal Solution to Multi-Object Tracking with Merged Measurements. *ICCV,* 2011
- **B. YANG ; C. HUANG ; R. NEVATIA.** Learning Affinities and Dependencies for Multi-Target Tracking using a CRF Model. *CVPR,* 2011
- **B. YANG ; R. NEVATIA.** An Online Learned CRF Model for Multi-Target Tracking. *CVPR,* 2012
- **A. ELLIS ; A. SHAHROKNI ; J. FERRYMAN.** Pets 2009 and Winter Pets 2009 Results, a Combined Evaluation. *PETS,* December 2009
- **Z. WU ; A. THANGALI ; S. SCLAROFF ; M. BETKE.** Coupling Detection and Data Association for Multiple Object Tracking. *CVPR,* 2012
- **L. LEAL-TAIXE ; G. PONS-MOLL ; B. ROSENHAHN.** Branch-And-Price Global Optimization for Multi-View Multi-Target Tracking. *CVPR,* 2012
- **D. DELANNAY ; N. DANHIER ; C. VLEESCHOUWER.** Detection and Recognition of Sports(wo)men from Multiple Views. *ICDSC,* August 2009, 1-7
- **W.-L. LU ; J.-A. TING ; K. P. MURPHY ; J. J. LITTLE.** Identifying Players in Broadcast Sports Videos Using Conditional Random Fields. *CVPR,* 2011
- **C. LI ; S. T. MCCORMICK ; D. SIMCHI-LEVI.** Finding disjoint paths with different path-costs: Complexity and algorithms. *Networks,* 1992
- **M. S. BAZARAA ; J. J. JARVIS ; H. D. SHERALI.** Linear Programming and Network Flows. John Wiley & Sons, 2010
- **D. CHOI ; I. CHOI.** On the Effectiveness of the Linear Programming Relaxation of the 0-1 Multi-Commodity Minimum Cost Network Flow Problem. *COCOON,* 2006
- **T. D'ORAZIO ; M. LEO ; N. MOSCA ; P. SPAGNOLO ; P. L. MAZZEO.** A Semi-Automatic System for Ground Truth Generation of Soccer Video Sequences. *IEEE International Conference on Advanced Video and Signal Based Surveillance,* 2009, 559-564
- **C. POPPE ; S. D. BRUYNE ; S. VERSTOCKT ; R. V. DE WALLE.** Multi-Camera Analysis of Soccer Sequences. *International Conference on Advanced Video and Signal Based Surveillance,* 2010
- **K. BERNARDIN ; R. STIEFELHAGEN.** Evaluating Multiple Object Tracking Performance: the Clear Mot Metrics. *EURASIP Journal on Image and Video Processing,* 2008, vol. 2008
- **R. KASTURI ; D. GOLDGOF ; P. SOUNDARARAJAN ; V. MANOHAR ; J. GAROFOLO ; M. BOONSTRA ; V. KORZHOVA ; J. ZHANG.** Framework for Performance Evaluation of Face, Text, and Vehicle Detection and Tracking in Video: Data, Metrics, and Protocol. *PAMI,* February 2009, vol. 31 (2), 319-336
- **H. W. KUHN.** The Hungarian Method for the Assignment Problem. *Naval Research Logistics Quarterly,* 1955